# EUROPEAN PATENT APPLICATION

(11) **EP 1 637 476 A2**
(43) Date of publication of application: **22.03.2006**
(21) Application number: 05076772.2
(22) Date of filing: 29.07.2005
(51) Int. Cl.: B65G 1/04, B65G 1/06

(54) **An automatic store**

(30) Priority: 17.09.2004 IT MO20040236
(71) Applicant: System S.p.A., 41042 Fiorano Modenese (MO) (IT)
(72) Inventor: Stefani, Franco, 41049 Sassuolo (Modena) (IT)
(74) Representative: Gotra, Stefano

(57) **Abstract**

The automatic store comprises: at least two walls (20) which delimit an internal space in which a plurality of objects (30) is arranged, which plurality of objects (30) is arranged on supports. At least one of the walls (20) has at least one opening (21) for introduction and extraction of the objects (30) from the space delimited by the walls (20). A vector (2) is slidable at least along a vertical direction (y) internally of the space delimited by the walls (20) and is provided with a transport organ (4) predisposed to remove/replace the objects (30) from or onto respective supports. The transport organ (4) is mobile with respect to the vector (2) by an amount which is sufficient to enable transport of the objects (30) between the supports and the outside of the space delimited by the walls (20) through the opening (21).

## Description

The store of the invention is especially suited to the management of flat trays which are stacked in columns one above another, with the interpositioning of rest planes.

The prior art includes automatic stores which generally comprise two vertical walls which delimit a space in which a plurality of objects or trays are arranged, aligned in two vertically-developing columns. Generally the vertical walls have an opening for introduction and/or extraction of the trays from the store at which a fixed loading/unloading station is arranged for the trays. Between the two columns of trays there is a vertically slidable vector which is slidably mounted on an upright. The vector is usually provided with a mobile element which comprises a tray moving organ. The moving organ can collect any tray from a column and transfer it to the fixed loading and unloading stations arranged at the openings afforded on the vertical walls. The vector positions itself at a predetermined tray which is removed by the movement organ and extracted from the column. The vector then translates vertically to one of the loading/unloading stations at which it unloads the tray. Similarly the vector can remove a tray from the loading/unloading stations and position it internally of a column in a predetermined position.

The presence of the fixed loading/unloading stations makes the layout of the store rather inflexible. The positions of the inlet and outlet openings, once established, can be varied only by quite long and laborious operations during which it is necessary to remove and reposition the loading and unloading stations at levels higher than the ground. The store further requires the presence of a loading/unloading station for each inlet and/or outlet opening, with an evident negative effect on installation and maintenance costs.

The main aim of the present invention is to provide an automatic store which obviates the drawbacks in automatic stores in the prior art.

Further characteristics and advantages of the automatic store of the invention will better emerge from the detailed description made herein below with reference to the appended figures of the drawings, which are intended as non-limiting examples, and in which:
Figure 1 is an automatic store according to the invention in a first operative configuration;

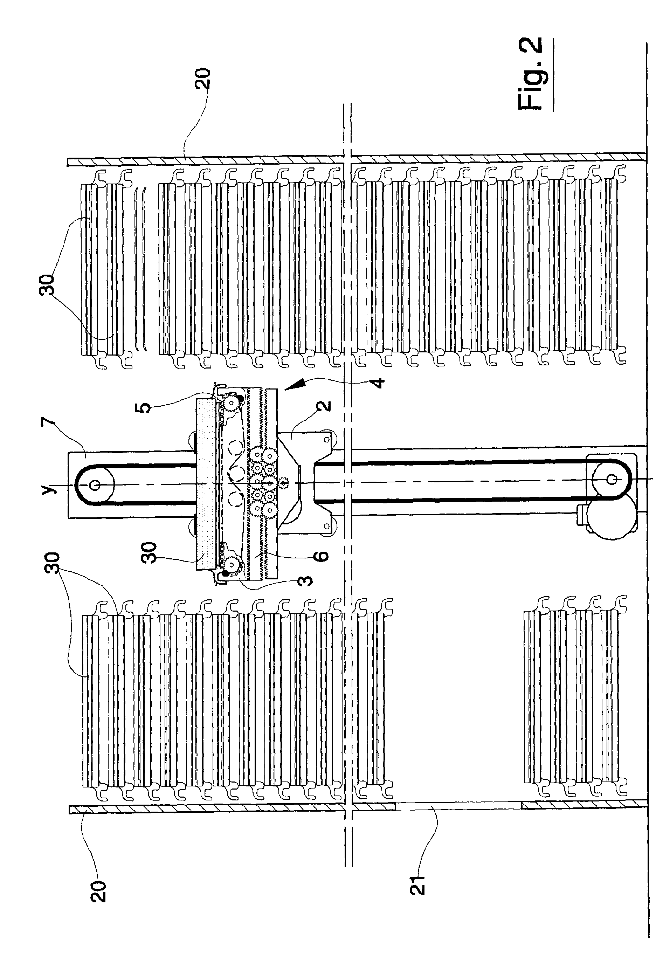

Figure 2 is the store of figure 1 in a second operative configuration;

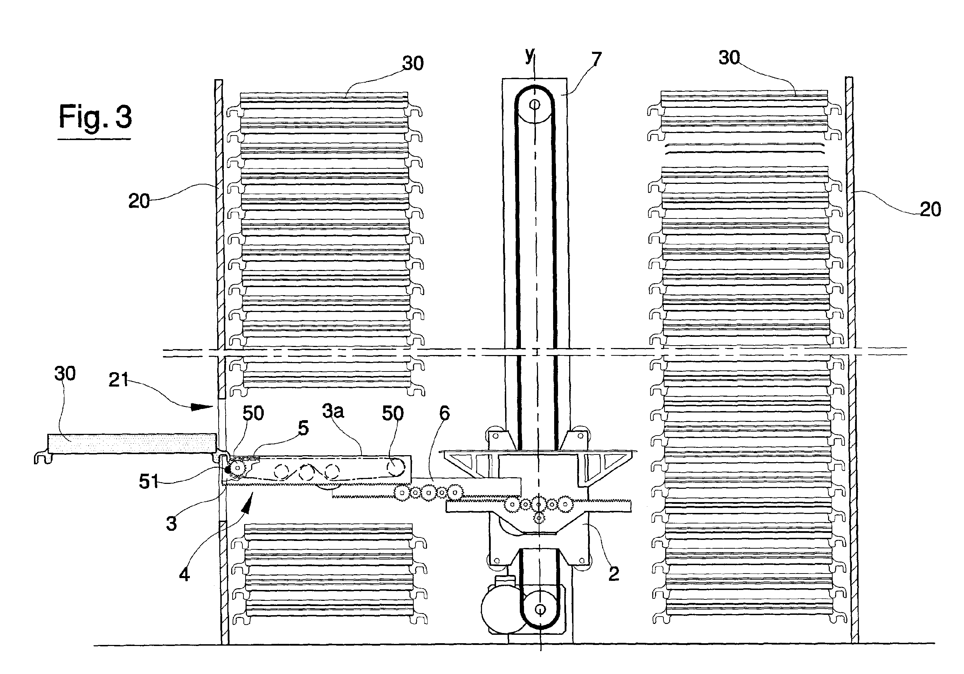

Figure 3 is the store of figure 1 in a third operative configuration.

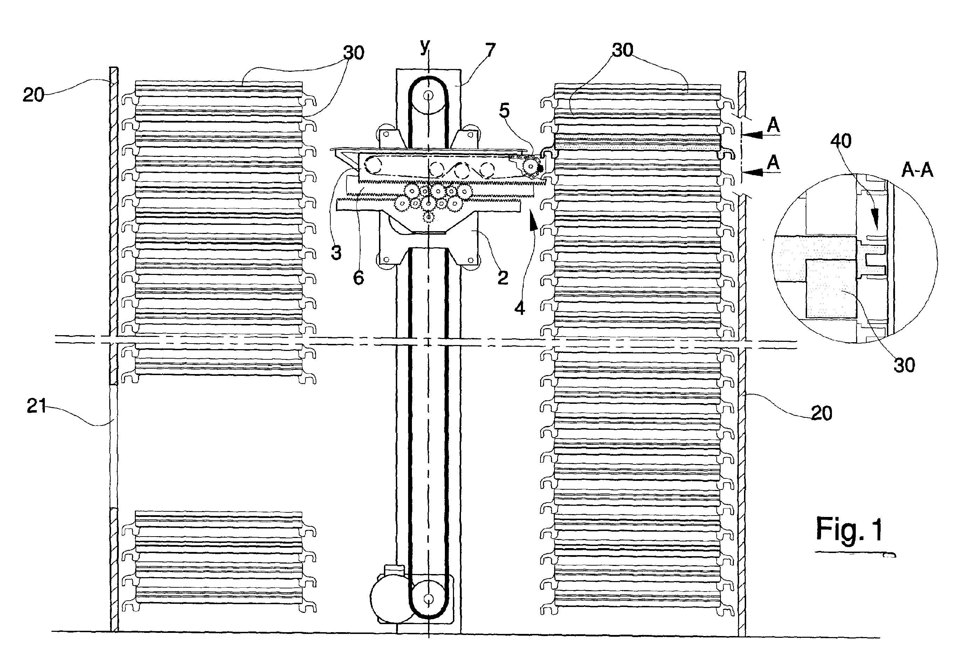

With reference to the figures of the drawings, the automatic store of the present invention comprises at least two walls 20 which delimit a space in which a plurality of objects 30 are arranged on respective supports. At least one of the walls 20 is provided with at least an opening 21 for introduction and extraction of the objects 30 from the space delimited by the walls 20. In a preferred use of the store, the objects 30 are constituted by trays, mainly flat, which are arranged on rest plants aligned in vertically-developing columns. These planes are constituted by ribs arranged transversally to the walls 20 on which the trays are slidable by means of guides 40 of known type and schematically represented in figure 1.

The store further comprises at least one vector 2 which is slidable at least in a vertical direction y internally of the space delimited by the walls 20 and provided with a transport organ 4 predisposed to remove/replace the objects 30 from and onto the respective supports. The transport organ 4 is mobile with respect to the vector 2 by a sufficient amount to enable transport of the objects 30 between the respective supports and the outside of the space delimited by the walls 20 through the opening 21 made on one of the walls 20.

The transport organ 4 comprises a first mobile element 3, slidable with respect to the vector 2 along a transversal direction to the vertical direction y, which superiorly exhibits a rest plane 3a predisposed to receive at least an object 30. A hinged chain 5 is mobile on at least two sprockets 50, one of which is motorised, associated to the first mobile element 3. The hinged chain 5 is provided with at least a hooking element 51 which, at least in a tract of the run of the hinged chain 5, projects superiorly to the rest plane 3a of the first mobile element 3 and engages to the objects 30.

The function of the vector 2 and the transport organ 4, by means of the first mobile element 3, is to move the objects internally of the space delimited by the walls 20, introducing and/or extracting the objects 30 from the space through the opening 21. The movement of an object 30 is consequent upon its being first loaded on the rest plane 3a of the first mobile element 3, and therefore displaced and unloaded in the desired position.

In order to perform these operations the vector 2 translates vertically up to a height at which the first mobile element 3 is below the object 30. At this point the first mobile element 3 translates horizontally up to a position in which the hooking element 51 of the hinged chain 5, following an activation of the hinged chain 5, projects from the rest plane 3a through an aperture and can engage in a seating afforded below the object 30. The run of the hinged chain 5 draws the object 30 into resting on the rest plane 3a of the first mobile element 3 up to a waiting position, at which the vector 2 moves to the height at which the object 30 is to be released. At this height the hinged chain 5 is activated and the object 30 is distanced from the rest plane 3a of the first mobile element 3. To perform a translation in the opposite direction, the hinged chain 5 must perform a complete circuit so as to bring the hooking element 51 to engage with the object 30 from the other side. To limit the run of the hinged chain 5, the chain can be provided with two hooking elements 51 arranged in such a way that each of them engages with an object 30 for one only sliding direction of the hinged chain 5.

As can be seen in the enclosed figures of the drawings, the displacement of the objects 30 can occur equally in two opposite directions. The first mobile element 3 can translate in two opposite directions in order to bring the transport organ into interaction with objects 30 arranged oppositely with respect to the vector 2, as shown in the figures. The figures show only one opening 21 on one of the walls 20, but, thanks to the complete reversibility of the translation of the objects 30 by means of the first mobile element 3 and the transport organ 4, the walls 20 can be each provided with one or more openings 21 arranged at equal or different levels.

The first mobile element 3 is slidable in opposite directions along a transversal direction with respect to the vertical direction y due to a mechanism operatively interpositioned between the vector 2 and the first mobile element 3. In the illustrated embodiment, the mechanism is constituted by a plurality of cogwheels, of which at least one is powered, which enmesh with a straight cogging.

A second mobile element 6 is operatively interpositioned between the vector 2 and the first mobile element 3, which second mobile element 6 is slidable in opposite directions with respect to the vector 2 along a transversal direction to the vertical direction y. The first mobile element 3 is in turn slidable along the same transversal direction with respect to the second mobile element 6.

The second mobile element 6 is slidable with respect to the vector 2 along a transversal direction with respect to the vertical direction y due to a mechanism which is operatively interpositioned between the vector 2 and the second mobile element 6. The first mobile element 3 is slidable with respect to the second mobile element 6 along a transversal direction with respect to the vertical direction y due to a mechanism which is operatively intepositioned between the second mobile element 6 and the first mobile element 3. The interpositioned mechanisms are preferably constituted by cogwheels which enmesh on racks.

The second mobile element 6 is essentially a prolongation of the first mobile element 3, and enables the vector to travel further distances or, with distances the same, to maintain the total masses of the two mobile elements at lower levels in a central position with respect to the vector 2. The second mobile element 6 can also translate in opposite directions.

The first and second mobile elements 3, 6, as well as the hinged chain 5, are activated to slide by means of known type not represented in the figures of the drawings.

The vector 2 is slidable on guides along a column developing vertically, and is powered vertically by means for activating. As can be seen in the appended figures of the drawings, the vector 2 is provided with guide wheels which roll on special tracks arranged on opposite sides of the column 7. The means for activating are constituted by a driven chain wound abut two pulleys associated to the column 7.

In an embodiment which is not illustrated, the column 7 can be slidable along a horizontal direction parallel to the development of the walls 20, in order to enable management of stores which include a plurality of columns of objects 30 aligned along the walls 20.

The automatic store of the present invention offers important advantages. Firstly it does not require the presence of fixed loading/unloading stations, as thanks to the characteristics of the mobile elements 3, 6 associated to the vector 2 the objects to be moved can be directly reached and removed externally of the store. This offers great flexibility in positioning the inlet and outlet openings of the store and also enables, with simple operations, the position of the openings to be changed at any moment, even after installation of the store. The lack of fixed loading/unloading stations also makes the store particularly economical both to install and to manage, as well as to maintain.

## Claims

1. An automatic store, comprising: at least two walls (20) which delimit an internal space in which a plurality of objects (30) is arranged, which plurality of objects (30) is arranged on supports, at least one of the walls (20) being provided with a least one opening (21) for introduction and extraction of the objects (30) from the space delimited by the walls (20); at least a vector (2) which is slidable at least along a vertical direction (y) internally of the space delimited by the walls (20) and provided with a transport organ (4) predisposed to remove/replace the objects (30) from or onto respective supports, **characterised in that** the transport organ (4) is mobile with respect to the vector (2) by an amount which is sufficient to enable transport of the objects (30) between the supports and the outside of the space delimited by the walls (20) through the opening (21).

2. The store of claim 1, **characterised in that** the transport organ (4) comprises: a first mobile element (3), slidable with respect to the vector (2) in a direction which is transversal to the vertical direction (y), which superiorly exhibits a rest plane (3a) predisposed to receive at least an object (30); a hinged chain (5) which is mobile on at least two sprockets (50), of which at least one is powered, associated to the first mobile element (3), the hinged chain (5) being provided with at least a hooking element (51) which, in at least a tract of run of the hinged chain (5), projects superiorly from the rest plane (3a) of the first mobile element (3) and engages the objects (30).

3. The store of claim 2, **characterised in that** the fist mobile element (3) is slidable along a transversal direction with respect to the vertical direction (y) due to a mechanism which is operatively interpositioned between the vector (2) and the first mobile element (3).

4. The store of claim 1, **characterised in that** a second mobile element (6) is interpositioned between the vector (2) and the first mobile element (3), the second mobile element (6) being slidable with respect to the vector (2) in a transversal direction to the vertical direction (y), the first mobile element (3) being slidable along the transversal direction with respect to the second mobile element (6).

5. The store of claim 4, **characterised in that**: the second mobile element (6) is slidable with respect to the vector (2) in a transversal direction with respect to the vertical direction (y) by means of a mechanism which is operatively interpositioned between the vector (2) and the second mobile element (6); the first mobile element (3) being slidable with respect to the second mobile element (6) in a transversal direction with respect to the vertical direction (y) by means of a mechanism which is operatively interpositioned between the second mobile element (6) and the first mobile element (3).

6. The device of claim 1, **characterised in that** the vector (2) is slidable on guides along a vertically-developing column (7), means for activating being included to slide the vector (2) vertically.
